# EUROPÄISCHE PATENTSCHRIFT

(11) **EP 2 636 768 B1**
(45) Veröffentlichungstag und Bekanntmachung des Hinweises auf die Patenterteilung: **04.05.2016**
(21) Anmeldenummer: 12158702.6
(22) Anmeldetag: 09.03.2012
(51) Int. Cl.: C25B 1/02, H01M 8/06, H01M 16/00, C25B 15/02, C25B 1/04, C25B 9/08

(54) **Verbesserte Wasserstoffentwicklungseinrichtung und diese umfassendes Brennstoffzellensystem**
Improved hydrogen development device and fuel cell system comprising same
Dispositif de formation d'hydrogène amélioré et système de cellules combustibles le renfermant

(43) Veröffentlichungstag der Anmeldung: 11.09.2013
(73) Patentinhaber: VARTA Microbattery GmbH, 73479 Ellwangen (DE)
(72) Erfinder: Krebs, Martin, 73494 Rosenberg-H. (DE)
(74) Vertreter: Patentanwaltskanzlei Cartagena

(56) Entgegenhaltungen:
- EP-A1- 1 437 918
- EP-A1- 1 970 472
- DE-A1-102005 018 291
- US-A- 5 242 565
- US-A1- 2001 045 364
- US-A1- 2004 229 090
- Robert Hahn: "Development of Portable Systems"; "12" In: Aline Léon: "Hydrogen Technology Mobile and Portable Applications", 2008, Springer-Verlag, Berlin Heidelberg, XP008152143, ISBN: 978-3-540-79027-3 Seiten 409-438, * Galvanic Cells; Seite 428, Absatz 12.3.3 - Seite 431 *

## Beschreibung

Die vorliegende Erfindung betrifft eine Wasserstoffentwicklungseinrichtung, die bei Durchfluss eines elektrischen Stroms eine zur Menge des durchfließenden Stroms proportionale Menge Wasserstoff freisetzt, sowie ein Verfahren zum Betrieb einer solchen Wasserstoffentwicklungseinrichtung. Weiterhin betrifft die Erfindung eine Vorrichtung zur Versorgung eines Verbrauchers mit elektrischer Energie, die eine solche Wasserstoffentwicklungseinrichtung aufweist und weiterhin eine Brennstoffzelle umfasst, in der Wasserstoff aus der Wasserstoffentwicklungseinrichtung unter Stromerzeugung mit einem Oxidationsmittel umsetzbar ist.

Aus der WO 2006/111335 A1 sowie aus einer Buchveröffentlichung von Hahn (Robert Hahn: "Development of Portable Systems", Kapitel 12 in A. Leon: "Hydrogen Technology Mobile and Portable Applications", 2008, Springer-Verlag, Berlin Heidelberg) ist ein System zur Versorgung eines Verbrauchers mit elektrischer Energie bekannt, das eine Wasserstoffentwicklungseinrichtung umfasst, die bei Durchfluss eines elektrischen Stroms Wasserstoff freisetzt. Gekoppelt ist diese mit einer Brennstoffzelleneinheit, in der von der Wasserstoffentwicklungseinrichtung erzeugter Wasserstoff mit einem Oxidationsmittel umgesetzt werden kann. Die Brennstoffzelleneinheit und die Wasserstoffentwicklungseinrichtung sind elektrisch in Reihe geschaltet, so dass unter Last die im Wesentlichen gleiche Strommenge durch die Brennstoffzelleneinheit und die Wasserstoffentwicklungseinrichtung fließt. Die Wasserstoffentwicklungseinrichtung umfasst bevorzugt knopfzellenförmige Wasserstoffentwicklungszellen, wie sie beispielsweise in der DE 35 32 335 A1 beschrieben sind.

Problematisch bei solchen Systemen ist häufig, dass Brennstoffzellen einen sehr hohen elektrischen Widerstand aufweisen, weshalb sich das Anfahren eines solchen Systems sehr träge gestalten kann. Gemäß der in der WO 2006/111335 A1 beschriebenen Erfindung wird dem dadurch begegnet, dass zu der Brennstoffzelleneinheit eine Parallelschaltung vorgesehen ist, über die beim Anschließen eines Verbrauchers unter Umgehung der Brennstoffzelleneinheit ein elektrischer Strom von der Wasserstoffentwicklungseinrichtung fließen kann. Beim Zuschalten des Verbrauchers kann somit ungehindert vom hohen elektrischen Widerstand der Brennstoffzelleneinheit Strom durch die Wasserstoffentwicklungseinrichtung fließen. Dadurch bedingt setzt in dieser eine Wasserstoffentwicklung ein, die wiederum ein zügigeres Anspringen der Brennstoffzelleneinheiten zur Folge hat. Es resultiert somit ein deutlich schnellerer Systemstart, als es ohne die Parallelschaltung der Fall wäre.

Ungeachtet dessen muss der Verlauf des Starts eines solchen Systems beispielsweise im Vergleich mit einer Batterie immer noch als vergleichsweise träge bezeichnet werden. Insbesondere bei tiefen Starttemperaturen (unter 0 °C) kann es trotz der Parallelschaltung unter Umständen mehrere Sekunden dauern, bis das System seine Nennspannung liefert.

Der vorliegenden Erfindung lag die Aufgabe zugrunde, das in der WO 2006/111335 A1 beschriebene System zu verbessern. Ziel der Entwicklungen war insbesondere, den Start eines Brennstoffzellensystems zu optimieren, das mit Wasserstoff aus einer Wasserstoffentwicklungseinrichtung gespeist wird.

Diese Aufgabe wird gelöst durch die Wasserstoffentwicklungseinrichtung mit den Merkmalen des Anspruchs 1 sowie das Verfahren mit den Merkmalen des Anspruchs 14. Bevorzugte Ausführungsformen der erfindungsgemäßen Wasserstoffentwicklungseinrichtung sind in den abhängigen Ansprüchen 2 bis 9 angegeben, eine bevorzugte Ausführungsform des erfindungsgemäßen Verfahrens findet sich im abhängigen Anspruch 15. Weiterhin ist auch die Vorrichtung mit den Merkmalen des Anspruchs 9 Gegenstand der vorliegenden Erfindung. Bevorzugte Ausführungsformen der erfindungsgemäßen Vorrichtung sind in den abhängigen Ansprüchen 10 bis 13 angegeben. Der Wortlaut sämtlicher Ansprüche wird hiermit durch Bezugnahme zum Inhalt der vorliegenden Beschreibung gemacht.

Die erfindungsgemäße Wasserstoffentwicklungseinrichtung umfasst mindestens eine Wasserstoffentwicklungszelle mit einer elektrochemisch oxidierbaren Anode, einer Wasserstoffkathode und einem Elektrolyten. Bei Durchfluss eines elektrischen Stroms setzt die mindestens eine Wasserstoffentwicklungszelle und damit auch die Wasserstoffentwicklungseinrichtung eine zur Menge des durchfließenden Stroms proportionale Menge Wasserstoff frei.

Als Elektrolyt kommt bevorzugt ein wässriger Elektrolyt zum Einsatz, insbesondere ein alkalischer Elektrolyt, beispielsweise Natron- oder Kalilauge.

Die Anode ist vorzugsweise eine Metallanode, insbesondere eine Zinkanode. Im Betrieb werden das Metall bzw. das Zink oxidiert. An der Wasserstoffkathode findet im Gegenzug eine Reduktion statt, bei der der Wasserstoff entsteht. Hinsichtlich des chemischen Verfahrensablaufs wird auf die bereits erwähnten DE 35 32 335 A1 und WO 2006/111335 A1 verwiesen.

Als Wasserstoffkathoden können insbesondere kunststoffgebundene Gasdiffusionselektroden zum Einsatz kommen. In solchen Elektroden bildet ein Kunststoffbinder (meist Polytetrafluorethylen, kurz PTFE) eine poröse Matrix aus, in die Partikel aus einem elektrokatalytisch aktiven Material (z.B. aus einem Edelmetall wie Platin oder Palladium) eingelagert sind. Diese müssen die erwähnte Reduktion katalysieren können. Die Herstellung solcher Elektroden erfolgt in aller Regel, indem eine Trockenmischung aus dem Binder und dem Katalysator zu einer Folie ausgewalzt wird. Diese kann wiederum in ein Metallnetz, z.B. aus Silber, Nickel oder versilbertem Nickel, eingewalzt werden. Das Metallnetz bildet eine Ableiterstruktur innerhalb der Kathode und dient als Stromableiter.

Besonders zeichnet sich eine Wasserstoffentwicklungseinrichtung gemäß der vorliegenden Erfindung dadurch aus, dass sie mindestens einen Heizwiderstand umfasst, der mit der mindestens einen Wasserstoffentwicklungszelle unmittelbar oder über einen festen oder flüssigen Wärmeleiter thermisch gekoppelt ist. Bei einem Heizwiderstand handelt es sich bekanntlich um ein elektrisches Bauelement, das elektrische Energie in thermische Energie umwandelt. Diese thermische Energie wird gemäß der vorliegenden Erfindung direkt oder über die erwähnten Wärmeleiter auf die mindestens eine Wasserstoffentwicklungszelle übertragen. Eine Erwärmung der mindestens einen Wasserstoffentwicklungszelle hat zur Folge, dass insbesondere die katalytische Reaktion an der Wasserstoffkathode schneller ablaufen kann. Insbesondere bei den eingangs erwähnten tiefen Temperaturen ist diese Reaktion kinetisch stark gehemmt. Durch die Erwärmung mittels des Heizwiderstandes kann die Kathodenreaktion schneller ablaufen.

Flüssige und feste Wärmeleiter sind dem Fachmann hinreichend bekannt. Beispielsweise kann als Wärmeleiter eine Paste enthaltend Kupferpartikel zum Einsatz kommen. Besonders bevorzugt steht der Heizwiderstand aber in unmittelbarem Kontakt zu der mindestens einen Wasserstoffentwicklungszelle, so dass kein separater Wärmeleiter benötigt wird.

Bevorzugt ist der Heizwiderstand thermisch an die Wasserstoffkathode der mindestens einen Wasserstoffentwicklungszelle gekoppelt. Dies ist insoweit zweckmäßig, als, wie ausgeführt, insbesondere die Kathodenreaktion durch die Erwärmung beschleunigt werden soll.

Die Wasserstoffentwicklungseinrichtung umfasst bevorzugt ein Verbindungsmittel, mittels dem die Anode und die Kathode der mindestens einen Wasserstoffentwicklungszelle über den Heizwiderstand elektrisch verbunden bzw. kurzgeschlossen werden können. Das Verbindungsmittel umfasst bevorzugt einen manuellen oder elektronischen Schalter. Dieser kann mit einem Temperatursensor gekoppelt und derart konfiguriert sein, dass er unterhalb einer vordefinierten Temperatur automatisch schließt und dabei den Heizwiderstand in Betrieb setzt. In einer weiteren bevorzugten Ausführungsform öffnet der Schalter wieder, sobald eine obere Schwellentemperatur (z.B. messbar mit einem weiteren Temperatursensor) überschritten ist.

Im Rahmen der vorliegenden Erfindung werden in aller Regel Wasserstoffentwicklungszellen eingesetzt, die eine Ruhespannung aufweisen, worunter verstanden werden soll, dass beim elektrischen Verbinden der Pole (Anoden und Kathode) der Wasserstoffentwicklungszellen ohne externe Triebkraft ein Strom zwischen den Polen der Gasentwicklungszelle fließt und die Wasserstoffentwicklung einsetzt. Geeignet sind beispielsweise die in der DE 35 32 355 A1 beschriebenen elektrochemischen Systeme, die eine Ruhespannung zwischen 0,25 V und 0,35 V aufweisen.

Werden die Anode und die Kathode einer solchen Wasserstoffentwicklungszelle mittels dem Verbindungsmittel über den Heizwiderstand elektrisch verbunden, so liefert die Wasserstoffentwicklungszelle selbst die Energie, die letztendlich zu ihrer Erwärmung mittels des Heizwiderstandes führt. Mit anderen Worten, der Heizwiderstand bezieht die zum Heizen erforderliche Energie aus der elektromotorischen Kraft der Wasserstoffentwicklungszelle. Eine externe Energiequelle ist nicht erforderlich. Besonders vorteilhaft dabei ist, dass durch den über das Verbindungsmittel fließenden Strom gleichzeitig Wasserstoff erzeugt wird und die Zelle geheizt wird.

Bevorzugt umfasst die erfindungsgemäße Wasserstoffentwicklungseinrichtung zwei oder mehr Wasserstoffentwicklungszellen, die in bevorzugten Ausführungsformen nebeneinander angeordnet sind oder einen Stapel bilden. Die Wasserstoffentwicklungszellen können innerhalb der Wasserstoffentwicklungseinrichtung in Reihe oder parallel zueinander geschaltet sein. Bevorzugt ist zwischen benachbarten Wasserstoffentwicklungszellen jeweils ein Heizwiderstand angeordnet. Wenn die Wasserstoffentwicklungseinrichtung zwei oder mehr Heizwiderstände umfasst, insbesondere angeordnet zwischen benachbarten Gasentwicklungszellen, so ist es bevorzugt, dass diese elektrisch in Reihe geschaltet sind.

Grundsätzlich kann die erfindungsgemäße Wasserstoffentwicklungseinrichtung knopfzellenförmige Wasserstoffentwicklungszellen aufweisen, wie sie in der WO 2006/111335 A1 beschrieben sind. Die Form der Wasserstoffentwicklungszellen ist jedoch grundsätzlich frei wählbar. Besonders bevorzugt kommen erfindungsgemäß Wasserstoffentwicklungszellen zum Einsatz, die prismatisch oder als Scheibe ausgebildet sind. Bei prismatischer Formgebung sind die Wasserstoffentwicklungszellen besonders bevorzugt als rechteckige oder quadratische Platte oder als flacher Quader ausgebildet. Insbesondere aus solchen Wasserstoffentwicklungszellen lassen sich besonders gut die erwähnten Stapel bilden.

Der mindestens eine Heizwiderstand ist in bevorzugten Ausführungsformen als dünne Platte, Folie oder Matte ausgebildet. Derartige flache Heizeinrichtungen sind aus dem Stand der Technik bekannt. Es handelt sich dabei beispielsweise um Heizeinrichtungen, bei denen bevorzugt bahnförmige Heizelemente, beispielsweise hergestellt durch Ätzen von Metallfolien, zwischen Isolierfolien aus Kunststoff einlaminiert sind. Derlei Heizeinrichtungen lassen sich aufgrund ihres dünnen Profils sehr vielseitig einsetzen. Insbesondere in Folien- oder Mattenform erlauben sie aufgrund ihrer Flexibilität die Herstellung einer sehr guten thermischen Verbindung zu dem zu beheizenden Gegenstand.

Besonders bevorzugt umfasst der Heizwiderstand einen hochohmigen Leiter und/oder einen Transistor, insbesondere einen Feldeffekttransistor (FET). Als Material für den hochohmigen Leiter können beispielsweise spezielle Heizleiterlegierungen oder Widerstandslegierungen verwendet werden, die einen über weite Temperaturbereiche annähernd konstanten spezifischen elektrischen Widerstand besitzen und vorzugsweise einen besonders hohen Schmelzpunkt haben und/oder resistent gegenüber Oxidation an der Luft sind. Dem Fachmann sind solche Legierungen bekannt.

Besonders bevorzugt umfasst der Heizwiderstand einen hochohmigen Leiter, der über einen elektronischen Schalter, insbesondere einen FET, geschaltet wird.

Eine erfindungsgemäße Vorrichtung dient zur Versorgung eines Verbrauchers mit elektrischer Energie. Bei dem Verbraucher kann es sich um ein beliebiges elektrisch betriebenes Gerät handeln.

Die erfindungsgemäße Vorrichtung umfasst eine Wasserstoffentwicklungseinrichtung, wie sie oben beschrieben ist. Des Weiteren umfasst die erfindungsgemäße Vorrichtung eine Brennstoffzelle, in der Wasserstoff aus der Wasserstoffentwicklungseinrichtung unter Stromerzeugung mit einem Oxidationsmittel umsetzbar ist.

Bei der Brennstoffzelle kann es sich grundsätzlich um jede Brennstoffzelle handeln, die in der Lage ist, Wasserstoff mit einem Oxidationsmittel umzusetzen. Beispielsweise sind die in der DE 101 55 349 A1 beschriebenen Folienbrennstoffzellen verwendbar. Besonders bevorzugt werden vorliegend Niedertemperatur-Brennstoffzellen eingesetzt, insbesondere Brennstoffzellen, die bei Temperaturen zwischen 50 °C und 120 °C betrieben werden. Bei dem Oxidationsmittel handelt es sich vorzugsweise um Luftsauerstoff.

In einer bevorzugten Ausführungsform sind die Wasserstoffentwicklungseinrichtung und die Brennstoffzelle elektrisch in Reihe geschaltet, so dass unter Last die im Wesentlichen gleiche Strommenge durch die Gasentwicklungseinrichtung und durch die Brennstoffzelle fließt. Der Vorteil einer solchen Anordnung ist in der WO 2006/111335 A1 beschrieben. In einer solchen Anordnung vermag die erfindungsgemäße Vorrichtung ihre elektrische Leistung dynamisch dem Leistungsbedarf des jeweiligen Verbrauchers anzupassen, was grundsätzlich den Verzicht auf ein separates (aufwendiges) Regelungssystem erlaubt.

In einer besonders bevorzugten Ausführungsform umfasst die erfindungsgemäße Vorrichtung neben dem in der Wasserstoffentwicklungseinrichtung integrierten Heizwiderstand einen weiteren Heizwiderstand, der unmittelbar oder über einen festen Wärmeleiter thermisch mit der Brennstoffzelle gekoppelt ist. Wie eingangs ausgeführt wurde, zeigen auch Brennstoffzellen beim Start aus dem Stand ein relativ träges Verhalten, weshalb in dem in der WO 2006/111335 A1 beschriebenen System eine Parallelschaltung zur Brennstoffzelleneinheit vorgesehen war. Integriert man in eine derartige Parallelschaltung einen Heizwiderstand und koppelt diesen thermisch mit der Brennstoffzelle, so lässt sich auch an dieser Stelle das Anfahren der Vorrichtung unterstützen.

Die vorliegende Erfindung umfasst weiterhin zwei Verfahren. Das eine dient zum Betrieb einer Wasserstoffentwicklungseinrichtung, die mindestens eine Wasserstoffentwicklungszelle mit einer elektrochemisch oxidierbaren Anode, einer Wasserstoffkathode und einem Elektrolyten umfasst und die bei Durchfluss eines elektrischen Stroms eine zur Menge des durchfließenden Stroms proportionale Menge Wasserstoff freisetzt. Das andere dient zum Betrieb eines Brennstoffzellensystems umfassend eine der beschriebenen Wasserstoffentwicklungseinrichtungen und mindestens eine Brennstoffzelle. Beide Verfahren zeichnen sich dadurch aus, dass die Wasserstoffentwicklungseinrichtung, insbesondere die Kathode der Wasserstoffentwicklungseinrichtung, mit einem Heizwiderstand erwärmt wird.

Bevorzugt bezieht der Heizwiderstand die zum Erwärmen der Wasserstoffentwicklungseinrichtung erforderliche Energie aus der Wasserstoffentwicklungseinrichtung selbst. Hierzu können die Anode und die Kathode der Wasserstoffentwicklungseinrichtung mittels dem oben beschriebenen Verbindungsmittel über den Heizwiderstand elektrisch verbunden werden.

In einer bevorzugten Ausführungsform wird der Heizwiderstand unterhalb einer unteren Schwellentemperatur zugeschaltet und oberhalb einer oberen Schwellentemperatur wieder abgeschaltet.

Weitere Merkmale und auch Vorteile der vorliegenden Erfindung ergeben sich aus der nun folgenden Beschreibung bevorzugter Ausführungsformen der erfindungsgemäßen Gegenstände in Verbindung mit den Unteransprüchen. Die dargestellten Merkmale der erfindungsgemäßen Gegenstände können jeweils für sich oder zu mehreren in Kombination bei einer Ausführungsform der Erfindung verwirklicht sein. Die Ausführungsbeispiele dienen lediglich zur Erläuterung und zum besseren Verständnis der Erfindung und sind in keiner Weise einschränkend zu verstehen.

### Figurenbeschreibung

- Fig. 1: zeigt schematisch das Schaltbild einer Ausführungsform einer erfindungsgemäßen Vorrichtung.
- Fig. 2: zeigt schematisch das Schaltbild einer weiteren Ausführungsform einer erfindungsgemäßen Vorrichtung.
- Fig. 3: zeigt schematisch das Schaltbild einer dritten Ausführungsform einer erfindungsgemäßen Vorrichtung.
- Fig. 4: zeigt eine Ausführungsform einer erfindungsgemäßen Wasserstoffentwicklungseinrichtung umfassend mehrere Wasserstoffentwicklungszellen.
- Fig. 5: illustriert den Aufbau einer Wasserstoffentwicklungszelle, wie sie in der in Fig. 4 dargestellten Wasserstoffentwicklungseinrichtung zum Einsatz kommen kann.

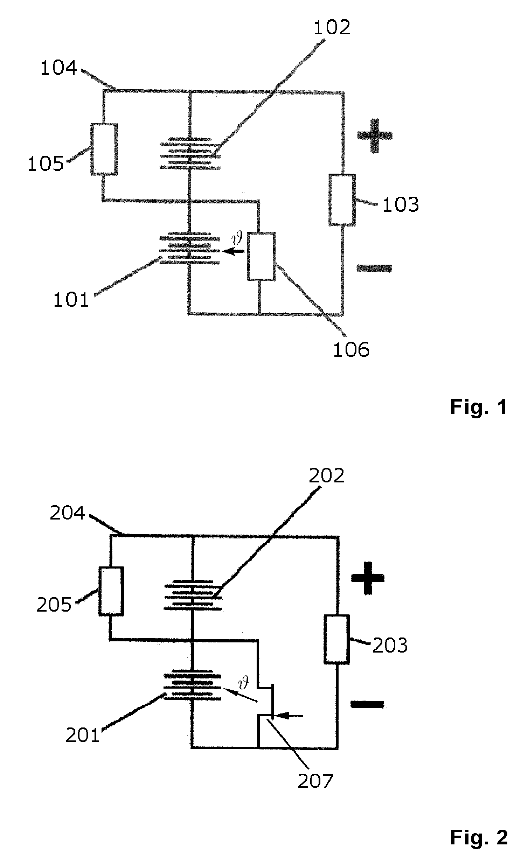

In **Fig. 1** ist eine einfache elektrische Schaltung einer erfindungsgemäßen Vorrichtung dargestellt, welche einen Verbraucher mit elektrischer Energie versorgt.

Die Brennstoffzellen **102** und die Wasserstoffentwicklungseinrichtung **101** (umfassend drei Wasserstoffentwicklungszellen) sind elektrisch in Reihe geschaltet. Die Wasserstoffentwicklungszellen weisen jeweils eine Ruhespannung zwischen 0,25 V und 0,35 V auf. Wird der elektrische Verbraucher **103** angeschlossen, so fließt zunächst ein relativ niedriger Strom über die Parallelschaltung **104,** die das elektronische Bauelement **105** umfasst. Bei dem Bauelement **105** kann es sich z.B. um eine Diode oder einen elektronischen Schalter handeln. In bevorzugten Ausführungsformen auch um einen Heizwiderstand, der thermisch mit den Brennstoffzellen **102** gekoppelt ist. Mit dem Fließen des Stroms über die Parallelschaltung **104** setzt in der Wasserstoffentwicklungseinrichtung **101** eine Wasserstoffentwicklung ein. Der gebildete Wasserstoff wird in den Brennstoffzellen **102** mit einem Oxidationsmittel, insbesondere mit Sauerstoff, umgesetzt.

Das Anfahren der Wasserstoffentwicklungseinrichtung lässt sich unterstützen, indem der Heizwiderstand **106** beim Start zugeschaltet wird. Der Heizwiderstand **106** ist thermisch mit der Wasserstoffentwicklungseinrichtung **9** gekoppelt und überträgt direkt nach Inbetriebnahme Wärme auf diese.

In **Fig. 2** ist eine weitere einfache elektrische Schaltung einer erfindungsgemäßen Vorrichtung dargestellt, welche einen Verbraucher mit elektrischer Energie versorgt.

Die Brennstoffzellen **202** und die Wasserstoffentwicklungseinrichtung **201** (umfassend drei Wasserstoffentwicklungszellen) sind elektrisch in Reihe geschaltet. Die Wasserstoffentwicklungszellen weisen jeweils eine Ruhespannung zwischen 0,25 V und 0,35 V auf. Wird der elektrische Verbraucher **203** angeschlossen, so fließt zunächst ein relativ niedriger Strom über die Parallelschaltung **204,** die das elektronische Bauelement **205** umfasst. Bei dem Bauelement **205** kann es sich z.B. um eine Diode oder einen elektronischen Schalter handeln. In bevorzugten Ausführungsformen auch um einen Heizwiderstand, der thermisch mit den Brennstoffzellen **202** gekoppelt ist. Mit dem Fließen des Stroms über die Parallelschaltung **204** setzt in der Wasserstoffentwicklungseinrichtung **201** eine Wasserstoffentwicklung ein. Der gebildete Wasserstoff wird in den Brennstoffzellen **202** mit einem Oxidationsmittel, insbesondere mit Sauerstoff, umgesetzt.

Das Anfahren der Wasserstoffentwicklungseinrichtung lässt sich unterstützen, indem der Feldeffekttransistor **207** als Heizwiderstand beim Start zugeschaltet wird. Der Feldeffekttransistor **207** ist thermisch mit der Wasserstoffentwicklungseinrichtung **20** gekoppelt und überträgt direkt nach Inbetriebnahme Wärme auf diese.

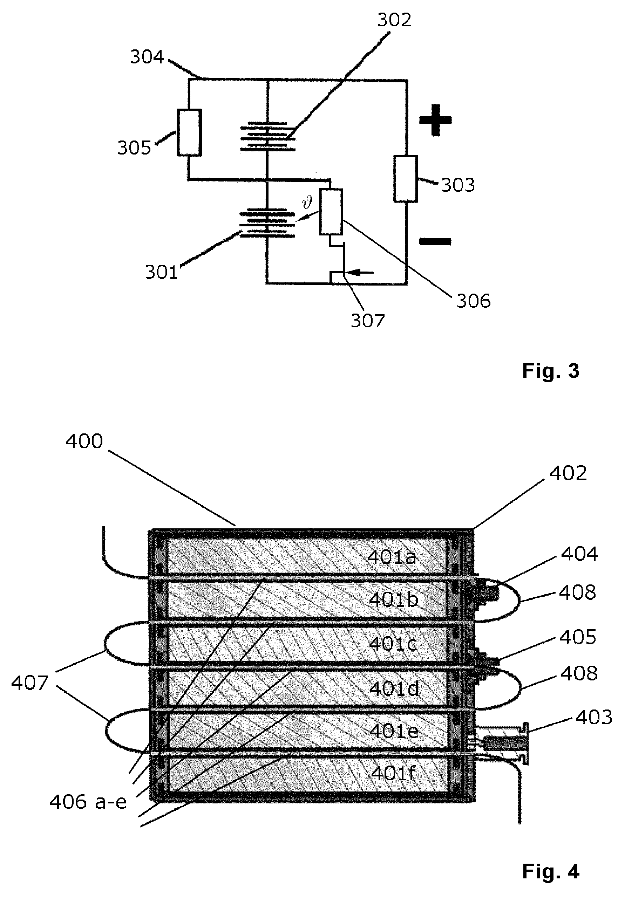

In **Fig. 3** ist eine weitere einfache elektrische Schaltung einer erfindungsgemäßen Vorrichtung dargestellt, welche einen Verbraucher mit elektrischer Energie versorgt.

Die Brennstoffzellen **302** und die Wasserstoffentwicklungseinrichtung **301** (umfassend drei Wasserstoffentwicklungszellen) sind elektrisch in Reihe geschaltet. Die Wasserstoffentwicklungszellen weisen jeweils eine Ruhespannung zwischen 0,25 V und 0,35 V auf. Wird der elektrische Verbraucher **303** angeschlossen, so fließt zunächst ein relativ niedriger Strom über die Parallelschaltung **304,** die das elektronische Bauelement **305** umfasst. Bei dem Bauelement **305** kann es sich z.B. um eine Diode oder einen elektronischen Schalter handeln. In bevorzugten Ausführungsformen auch um einen Heizwiderstand, der thermisch mit den Brennstoffzellen **302** gekoppelt ist. Mit dem Fließen des Stroms über die Parallelschaltung **304** setzt in der Wasserstoffentwicklungseinrichtung **301** eine Wasserstoffentwicklung ein. Der gebildete Wasserstoff wird in den Brennstoffzellen **302** mit einem Oxidationsmittel, insbesondere mit Sauerstoff, umgesetzt.

Das Anfahren der Wasserstoffentwicklungseinrichtung lässt sich unterstützen, indem über der Feldeffekttransistor **307** der Heizwiderstand **306** beim Start zugeschaltet wird. Der Heizwiderstand **306** ist thermisch mit der Wasserstoffentwicklungseinrichtung **301** gekoppelt und überträgt direkt nach Inbetriebnahme Wärme auf diese.

In **Fig. 4** ist eine erfindungsgemäße Wasserstoffentwicklungseinrichtung **400** dargestellt. Diese umfasst die Wasserstoffentwicklungszellen **401a** bis **401f.** Jede dieser Zellen ist als rechteckige Platte ausgebildet. Die plattenförmigen Zellen **401a** bis **401f** sind stapelartig angeordnet. Jede der Platten umfasst ein Gehäuse, in dem eine Wasserstoffkathode und eine oxidierbare Metallanode angeordnet sind. Die Gehäuse der Wasserstoffentwicklungseinrichtungen sind zumindest in Teilbereichen porös, so dass in den Zellen erzeugter Wasserstoff austreten kann. Umgeben sind die Wasserstoffentwicklungszellen **401a** bis **401f** von einem Gehäuse **402.** Durchbrochen wird dieses von den Polen **404** und **405.** Einer der Pole ist mit den oxidierbaren Metallanoden der Zellen **401a** bis **401f** elektrisch verbunden, der andere mit den Wasserstoffkathoden der Zellen **401a** bis **401f.** Innerhalb des Gehäuses **402** generierter Wasserstoff kann über das Ventil **403** abgelassen werden.

Die Zwischenräume zwischen den plattenförmigen Wasserstoffentwicklungszellen **401a** bis **401f** sind mit den Heizelementen **406a** bis **406e** gefüllt. Bei diesen Heizelementen handelt es sich um Heizfolien, die über die elektrischen Verbindungselemente **407** und **408** in Reihe geschaltet sind. Mittels dieser Folien ist eine großflächige Erwärmung der Wasserstoffentwicklungszellen **401a** bis **401f** möglich.

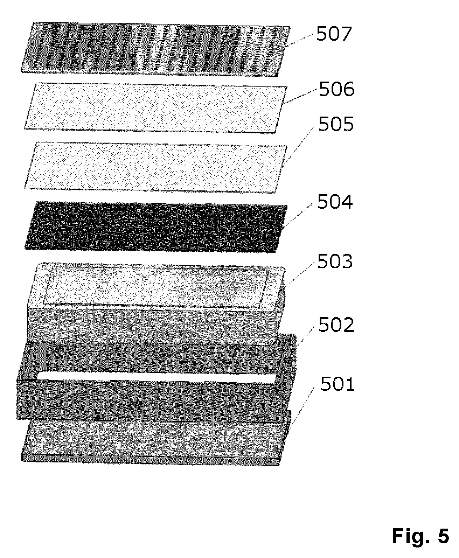

In **Fig. 5** ist der Aufbau einer der in der Wasserstoffentwicklungseinrichtung **400** enthaltenen Wasserstoffentwicklungszellen erläutert. Eine solche umfasst einen Anodendeckel **501,** insbesondere aus Trimetall, einen Gehäuserahmen **502** (beispielsweise aus Kunststoff) sowie eine Anodenmasse **503,** bei der es sich beispielsweise um eine zinkhaltige Paste handeln kann. Auf die Anodenmasse **503** wird das Kathodenband **504** abgelegt, das wiederum mit mindestens einer mikroporösen Teflonfolie **505** abgeschirmt wird. Es folgen das Gasverteilervlies **506** und der mit Löchern versehenen Deckel **507.**

## Patentansprüche

1. Wasserstoffentwicklungseinrichtung, die bei Durchfluss eines elektrischen Stroms eine zur Menge des durchfließenden Stroms proportionale Menge Wasserstoff freisetzt, umfassend mindestens eine Wasserstoffentwicklungszelle mit einer elektrochemisch oxidierbaren Anode, einer Wasserstoffkathode und einem Elektrolyten, **dadurch gekennzeichnet, dass** sie mindestens einen Heizwiderstand aufweist, der mit der mindestens einen Wasserstoffentwicklungszelle unmittelbar oder über einen festen oder flüssigen Wärmeleiter thermisch gekoppelt ist.

2. Wasserstoffentwicklungseinrichtung nach Anspruch 1, **dadurch gekennzeichnet, dass** der Heizwiderstand thermisch an die Wasserstoffkathode der mindestens einen Wasserstoffentwicklungszelle gekoppelt ist.

3. Wasserstoffentwicklungseinrichtung nach Anspruch 1 oder Anspruch 2, umfassend ein Verbindungsmittel, mittels dem die Anode und die Kathode der Wasserstoffentwicklungszelle über den Heizwiderstand elektrisch verbunden werden können.

4. Wasserstoffentwicklungseinrichtung nach einem der vorhergehenden Ansprüche, umfassend einen Stapel aus zwei oder mehr Gasentwicklungszellen, wobei zwischen benachbarten Gasentwicklungszellen jeweils ein Heizwiderstand angeordnet ist.

5. Wasserstoffentwicklungseinrichtung nach einem der vorhergehenden Ansprüche, insbesondere nach Anspruch 4, **dadurch gekennzeichnet, dass** sie zwei oder mehr Heizwiderstände umfasst, insbesondere zwischen benachbarten Gasentwicklungszellen, die elektrisch in Reihe geschaltet sind.

6. Wasserstoffentwicklungseinrichtung nach einem der vorhergehenden Ansprüche, **dadurch gekennzeichnet, dass** die mindestens eine Wasserstoffentwicklungszelle, insbesondere die mindestens zwei Wasserstoffentwicklungszellen innerhalb des Stapels gemäß Anspruch 4, prismatisch, insbesondere als Platte oder flacher Quader, oder als Scheibe ausgebildet sind.

7. Wasserstoffentwicklungseinrichtung nach einem der vorhergehenden Ansprüche, **dadurch gekennzeichnet, dass** der mindestens eine Heizwiderstand als Platte, Folie oder Matte ausgebildet ist.

8. Wasserstoffentwicklungseinrichtung nach einem der vorhergehenden Ansprüche, **dadurch gekennzeichnet, dass** der Heizwiderstand einen hochohmigen Leiter und/oder einen Transistor, insbesondere einen Feldeffekttransistor, umfasst.

9. Wasserstoffentwicklungseinrichtung nach einem der vorhergehenden Ansprüche, **dadurch gekennzeichnet, dass** der Heizwiderstand einen hochohmigen Leiter umfasst, der über einen elektronischen Schalter, insbesondere einen Feldeffekttransistor, geschaltet wird.

10. Vorrichtung zur Versorgung eines Verbrauchers mit elektrischer Energie, umfassend eine Wasserstoffentwicklungseinrichtung nach einem der vorhergehenden Ansprüche sowie eine Brennstoffzelle, in der Wasserstoff aus der Wasserstoffentwicklungseinrichtung unter Stromerzeugung mit einem Oxidationsmittel umsetzbar ist.

11. Vorrichtung nach Anspruch 10, **dadurch gekennzeichnet, dass** die Wasserstoffentwicklungseinrichtung und die Brennstoffzelle elektrisch in Reihe geschaltet sind, so dass unter Last die im Wesentlichen gleiche Strommenge durch die Gasentwicklungseinrichtung und durch die Brennstoffzelle fließt.

12. Vorrichtung nach Anspruch 10 oder Anspruch 11, **dadurch gekennzeichnet, dass** sie einen weiteren Heizwiderstand umfasst, der unmittelbar oder über einen festen Wärmeleiter thermisch mit der Brennstoffzelle gekoppelt ist.

13. Vorrichtung nach Anspruch 12, **dadurch gekennzeichnet, dass** der weitere Heizwiderstand und die Brennstoffzelle parallel zueinander geschaltet sind.

14. Verfahren zum Betrieb einer Wasserstoffentwicklungseinrichtung, die bei Durchfluss eines elektrischen Stroms eine zur Menge des durchfließenden Stroms proportionale Menge Wasserstoff freisetzt, umfassend mindestens eine Wasserstoffentwicklungszelle mit einer elektrochemisch oxidierbaren Anode, einer Wasserstoffkathode und einem Elektrolyten, oder einer Brennstoffzelle, die mit Wasserstoff aus der Wasserstoffentwicklungseinrichtung gespeist wird, **dadurch gekennzeichnet, dass** die Kathode der Wasserstoffentwicklungseinrichtung mit einem Heizwiderstand erwärmt wird, der unmittelbar oder über einen festen oder flüssigen Wärmeleiter mit der Wasserstoffentwicklungszelle thermisch gekoppelt ist.

15. Verfahren nach Anspruch 14, **dadurch gekennzeichnet, dass** der Heizwiderstand zugeschaltet wird, bis die Kathode eine vordefinierte Solltemperatur erreicht hat.

## Claims

1. Hydrogen evolution device, which in response to being flowed through by an electric current liberates an amount of hydrogen proportional to the amount of current flowing through, comprising at least one hydrogen evolution cell with an electrochemically oxidizable anode, a hydrogen cathode and an electrolyte, **characterized in that** it has at least one heating resistor, which is thermally coupled to the at least one hydrogen evolution cell directly or via a solid or liquid heat conductor.

2. Hydrogen evolution device according to Claim 1, **characterized in that** the heating resistor is thermally coupled to the hydrogen cathode of the at least one hydrogen evolution cell.

3. Hydrogen evolution device according to Claim 1 or Claim 2, comprising a connecting means, by means of which the anode and the cathode of the hydrogen evolution cell can be electrically connected via the heating resistor.

4. Hydrogen evolution device according to one of the preceding claims, comprising a stack of two or more gas evolution cells, a heating resistor being respectively arranged between adjacent gas evolution cells.

5. Hydrogen evolution device according to one of the preceding claims, in particular according to Claim 4, **characterized in that** it comprises two or more heating resistors, in particular between adjacent gas evolution cells that are electrically connected in series.

6. Hydrogen evolution device according to one of the preceding claims, **characterized in that** the at least one hydrogen evolution cell, in particular the at least two hydrogen evolution cells, is/are formed within the stack according to Claim 4 prismatically, in particular as a sheet or flat cuboid, or as a disc.

7. Hydrogen evolution device according to one of the preceding claims, **characterized in that** the at least one heating resistor is formed as a sheet, film or mat.

8. Hydrogen evolution device according to one of the preceding claims, **characterized in that** the heating resistor comprises a high-impedance conductor and/or a transistor, in particular a field-effect transistor.

9. Hydrogen evolution device according to one of the preceding claims, **characterized in that** the heating resistor comprises a high-impedance conductor, which is switched via an electronic switch, in particular a field-effect transistor.

10. Device for supplying a consumer with electrical energy, comprising a hydrogen evolution device according to one of the preceding claims and also a fuel cell, in which hydrogen from the hydrogen evolution device can be reacted with an oxidizing agent to generate electric power.

11. Device according to Claim 10, **characterized in that** the hydrogen evolution device and the fuel cell are electrically connected in series, so that under load substantially the same amount of current flows through the gas evolution device and through the fuel cell.

12. Device according to Claim 10 or Claim 11, **characterized in that** it comprises a further heating resistor, which is thermally coupled to the fuel cell directly or via a solid heat conductor.

13. Device according to Claim 12, **characterized in that** the further heating resistor and the fuel cell are connected in parallel to one another.

14. Method for operating a hydrogen evolution device, which in response to being flowed through by an electric current liberates an amount of hydrogen proportional to the amount of current flowing through, comprising at least one hydrogen evolution cell with an electrochemically oxidizable anode, a hydrogen cathode and an electrolyte, or a fuel cell, which is fed with hydrogen from the hydrogen evolution device, **characterized in that** the cathode of the hydrogen evolution device is heated by a heating resistor, which is thermally coupled to the hydrogen evolution cell directly or via a solid or liquid heat conductor.

15. Method according to Claim 14, **characterized in that** the heating resistor is switched on until the cathode has reached a predefined desired temperature.

## Revendications

1. Dispositif de développement d'hydrogène qui, lors du passage d'un courant électrique, libère une quantité d'hydrogène proportionnelle à la quantité de courant en circulation, comprenant au moins une cellule de développement d'hydrogène comportant une anode électrochimiquement oxydable, une cathode à hydrogène et un électrolyte, **caractérisé en ce qu'**il comporte au moins une résistance chauffante qui est couplée thermiquement à l'au moins une cellule de développement d'hydrogène soit directement, soit par l'intermédiaire d'un conducteur de chaleur solide ou liquide.

2. Dispositif de développement d'hydrogène selon la revendication 1, **caractérisé en ce que** la résistance chauffante est couplée thermiquement à la cathode à hydrogène de l'au moins une cellule de développement d'hydrogène.

3. Dispositif de développement d'hydrogène selon la revendication 1 ou la revendication 2, comprenant un moyen de connexion à l'aide duquel l'anode et la cathode de la cellule de développement d'hydrogène peuvent être électriquement connectées par l'intermédiaire de la résistance chauffante.

4. Dispositif de développement d'hydrogène selon l'une quelconque des revendications précédentes, comprenant un empilement de deux cellules de développement de gaz ou davantage, dans lequel une résistance chauffante respective est disposée entre des cellules de développement de gaz adjacentes.

5. Dispositif de développement d'hydrogène selon l'une quelconque des revendications précédentes, notamment selon la revendication 4, **caractérisé en ce qu'**il comprend deux résistances chauffantes ou davantage, notamment entre des cellules de développement de gaz voisines, qui sont électriquement connectées en série.

6. Dispositif de développement d'hydrogène selon l'une quelconque des revendications précédentes, **caractérisé en ce que** l'au moins une cellule de développement d'hydrogène, notamment les aux moins deux cellules de développement d'hydrogène, sont réalisées de manière prismatique, notamment sous la forme de plaques ou de quadrilatères plans, ou de disques, à l'intérieur de l'empilement selon la revendication 4.

7. Dispositif de développement d'hydrogène selon l'une quelconque des revendications précédentes, **caractérisé en ce que** l'au moins une résistance chauffante est réalisée sous la forme d'une plaque, d'une feuille ou d'une nappe.

8. Dispositif de développement d'hydrogène selon l'une quelconque des revendications précédentes, **caractérisé en ce que** la résistance chauffante comprend un conducteur et/ou un transistor, notamment un transistor à effet de champ, de forte résistance.

9. Dispositif de développement d'hydrogène selon l'une quelconque des revendications précédentes, **caractérisé en ce que** la résistance chauffante comprend un conducteur de forte résistance qui est connecté par l'intermédiaire d'un commutateur électronique, notamment d'un transistor à effet de champ.

10. Dispositif d'alimentation d'une charge en énergie électrique, comprenant un dispositif de développement d'hydrogène selon l'une quelconque des revendications précédentes, ainsi qu'une pile à combustible dans laquelle de l'hydrogène provenant du dispositif de développement d'hydrogène peut être converti en générant un courant à l'aide d'un moyen d'oxydation.

11. Dispositif selon la revendication 10, **caractérisé en ce que** le dispositif de développement d'hydrogène et la pile à combustible sont électriquement connectés en série de manière à ce que, en présence d'une charge, des quantités de courant identiques passent à travers le dispositif de développement de gaz et à travers la pile à combustible.

12. Dispositif selon la revendication 10 ou la revendication 11, **caractérisé en ce qu'**il comprend une résistance chauffante supplémentaire qui est thermiquement couplée à la pile à combustible directement ou par l'intermédiaire d'un conducteur de chaleur fixe.

13. Dispositif selon la revendication 12, **caractérisé en ce que** la résistance chauffante supplémentaire et la pile à combustible sont connectées en parallèle l'une à l'autre.

14. Procédé de mise en fonctionnement d'un dispositif de développement d'hydrogène qui, lors du passage d'un courant électrique, libère une quantité d'hydrogène proportionnelle à la quantité de courant en circulation, comprenant au moins une cellule de développement d'hydrogène comportant une anode électrochimiquement oxydable, une cathode à hydrogène et un électrolyte, ou une pile à combustible qui est alimentée en hydrogène provenant du dispositif de développement d'hydrogène, **caractérisé en ce que** la cathode du dispositif de développement d'hydrogène est chauffée par une résistance chauffante qui est thermiquement couplée à la cellule de développement d'hydrogène directement ou par l'intermédiaire d'un conducteur de chaleur solide ou liquide.

15. Procédé selon la revendication 14, **caractérisé en ce que** la résistance chauffante est activée jusqu'à ce que la cathode atteigne une température nominale prédéfinie.
